(19) **Europäisches Patentamt / European Patent Office / Office européen des brevets**

(11) **EP 1 680 610 B1**

(12) **EUROPEAN PATENT SPECIFICATION**

(45) Date of publication and mention
of the grant of the patent:
**22.07.2009 Bulletin 2009/30**

(21) Application number: **04817382.7**

(22) Date of filing: **15.10.2004**

(51) Int Cl.:
**F16G 1/12** *(2006.01)* **D07B 1/06** *(2006.01)*

(86) International application number:
**PCT/EP2004/052557**

(87) International publication number:
**WO 2005/043003 (12.05.2005 Gazette 2005/19)**

(54) **FINE STEEL CORD WITH A LOW STRUCTURAL ELONGATION**

FEINER STAHLKORD MIT GERINGER STRUKTURELLER DEHNUNG

CABLE D'ACIER FIN A FAIBLE ALLONGEMENT STRUCTURAL

(84) Designated Contracting States:
**AT BE BG CH CY CZ DE DK EE ES FI FR GB GR HU IE IT LI LU MC NL PL PT RO SE SI SK TR**

(30) Priority: **03.11.2003 EP 03104053**

(43) Date of publication of application:
**19.07.2006 Bulletin 2006/29**

(73) Proprietor: **NV Bekaert SA**
**8550 Zwevegem (BE)**

(72) Inventors:
• **VANCOMPERNOLLE, Stijn**
**B-9000 Gent (BE)**
• **BRUYNEEL, Paul**
**B-8710 Wielsbeke (BE)**
• **VANDERBEKEN, Bert**
**B-8790 Waregem (BE)**

(56) References cited:
**EP-A- 0 548 539**       **EP-A- 0 752 325**
**EP-A- 0 960 749**       **US-A- 4 123 894**
**US-A- 4 602 476**       **US-A- 5 784 874**

Remarks:
The file contains technical information submitted after the application was filed and not included in this specification

## Description

### Field of the invention.

The invention relates to a fine steel cord for reinforcing a synchronous belt.

### Background of the invention.

Synchronous belts have found their way in many precision machines; in automobiles, in computer peripheral apparatus such as printers and copying machines, in positioning systems and in many other applications. In the art they are also known under other names such as 'toothed belts', 'transmission belts' or 'timing belts'. In what follows, the terms and definitions according the standard ISO 5288-1982 will be adhered to. Industry standards DIN 7721-1989 and ISO 5296-1: 1989 define the sizes and tolerances of commercially available synchronous belts. Synchronous belts are applied where power transmission or precise longitudinal continuous or stepped displacement of the belt or precise angular positioning over a longer distance is of the essence. One of the main requirements posed to a synchronous belt is the tolerance on the pitch length (see ISO 5288 for the definition), which on its turn determines the tooth pitch. Depending on the size of the belt the pitch length tolerance varies from ± 0.28 mm on a pitch length of 100 mm (0.28%) to ± 1.46 mm on a pitch length of 3620 mm (or 0.04%, see DIN 7721). In practice the tolerances as set forth by the DIN 7721 standard are not longer sufficient as uses of synchronous belts are spanning longer distances or require better precision control. Also the fitting between belt tooth and gear wheel has to remain very precise during the use of the belt. The above mentioned tolerances only apply for unused synchronous belts. Any misfit during engagement of the tooth into the gear recess will lead to premature wear of the belt or even teeth jumping out of the gear. The problem of 'dimensional control' has thus emerged for synchronous belts.

Over the years fine steel cords has become a preferred reinforcement for synchronous belts due to their high resistance to creep and the high modulus compared to other materials. Multistrand (e.g. 7x3, 3x3) cords remain the preferred type of reinforcement. The configuration where the strands have the opposite lay direction of the cord ('s' strands in a 'Z' cord - or sZ for short - and vice versa zS) is preferred due to its better torsion behaviour although other cords where strands and cord have equal lay direction (sS or zZ) are known with controlled torsion behaviour (US 5 784 874).

Multistrand cords were widely used in the past for the reinforcement of radial tires. Load-elongation diagrams of all multistrand cords known in the art do not show a linear elastic behaviour from the start of the curve onward: there is a small offset of the linear part attributed to the (re) arrangement of filaments and strands in the cord upon loading or unloading. This offset is called 'structural elongation' (see infra) and is never smaller than 0.090 %. It is found that this 'structural elongation' is even more pronounced when using finer filaments to make the multistrand cord.

Single strand cords such as e.g. described in EP0960749) have a much more pronounced linear behaviour and show less 'structural elongation'. However, these cords are not always fit to reinforce synchronous belts Because thee are stiffer for the same cord diameter - as they consist of less filaments - and because the are smooth and hence show less mechanical anchorage in the belt.

During the manufacturing of the synchronous belt the fine steel cords are unwound with a low pay-off tension from spools mounted on a creel before entering the elastomer. These forces are not high enough to completely eliminate the structural elongation. Upon pre-tensioning the synchronous belt between the toothed wheels the remaining structural elongation of the cords will lead to out of specification tooth pitch and the problems associated with this. Up to now, belt manufacturers have compensated the dimensional control problem by (see e.g. 'Antriebstechnik 38 (1999) Nr. 5, p. 71-73'):

- Producing toothed belts with a tooth pitch at the lower dimensional specification which compensates for the structural elongation of the fine steel cords and/or
- Adding additional reinforcement so that the total longitudinal stiffness of the belt increases thus reducing the structural elongation and also increasing the overall modulus of the reinforcement leading to less elongation difference between the loaded and unloaded part of the belt cycle.

Both of these solutions have their drawbacks in terms of more rejects and/or more expensive belts. Belts are manufactured wider and wider as this is more productive as they are slit afterwards into smaller belts. However, with increasing width the synchronous belt production is more susceptible to the 'curling' effect (when hanging a piece of the belt freely, the free end turns with respect to the fixed end) or the 'sabre' effect (a piece of the belt laid down on a flat surface is not straight, but curved). Both effects are very detrimental in the use of the belt, as they tend to derail the belt from the gear wheel.

Multistrand cords are made in a two-step process. In a first step filaments are twisted to a strand with a particular lay length and direction onto a strand spool. In a second step a number of strands are pulled-off from the strand spools and twisted to a cord with a specified lay length and direction. Either one or both of the twisting steps can be performed in a cabling machine or alternatively in a bunching machine. In the art, the latter technology is preferred due to its higher twisting speed and due to the larger spools that it allows for. However, in case the cord is of the sZ type - or its' mirror image the zS type - and the cord is twisted in a bunching machine, account has to be taken for the number of twists that are taken out of the strand by the bunching operation. If we denominate the number of twists of the strands per unit length of finished cord by $N_c$ and the number of twists of the filaments per unit length of strand in the finished cord as $N_s$ then the strands have to be twisted up to $N_s+N_c$ twists in order to end with $N_s$ twists per unit length of the strand in the final cord.

## Summary of the invention.

The inventors have found a different solution to solve the 'dimensional control problem' of synchronous belts, which is a first object of the invention. Surprisingly their solution also solved the 'curling' and 'sabre' effect. In addition their solution also increased the overall modulus of the cord in the working region of the belt thus reducing the elongation of the belt between loaded and unloaded part of a belt cycle without having to use more reinforcement material: a second object of the invention. The inventors have found a method to produce the multi strand cords in an efficient way: a third object of this invention.

The invention relates to the combination of features as described in claim 1. Specific features for preferred embodiments of the invention are set out in the dependent claims 2 to 8 and 12 to 14. The invented method is comprised by the combination of features as described in claim 9. Specific features of preferred methods are in claims 10 and 11. The use of the fine steel cord as a reinforcement for synchronous belts is claimed in claim 15.

According a first aspect of the invention a fine steel cord for reinforcing a synchronous belt is claimed. Plain carbon steel is preferably used. Such a steel generally comprises a minimum carbon content of 0.40 wt% C or at least 0.70 wt% C but most preferably at least 0.80 wt% C with a maximum of 1.1 wt% C, a manganese content ranging from 0.10 to 0.90 wt% Mn, the sulfur and phosphorous contents are each preferably kept below 0.03 wt%; additional micro-alloying elements such as chromium (up to 0.2 to 0.4 wt%), boron, cobalt, nickel, vanadium - a non-exhaustive enumeration- may also be added. Also preferred are stainless steels. Stainless steels contain a minimum of 12 wt% Cr and a substantial amount of nickel. More preferred are austenitic stainless steels, which lend themselves more to cold forming. The most preferred compositions are known in the art as AISI (American Iron and Steel Institute) 302, AISI 301, AISI 304 and AISI 316.

The fine steel cord comprises at least two strands, each of said strands comprising at least two steel filaments. The filaments have dimensions ranging between 30 $\mu$m and 250 $\mu$m but most preferred are sizes between 40 and 175 $\mu$m. The most preferred filament size is between 120 to 160 $\mu$m. As these filaments are relatively thin compared to tire cord filaments, the cords resulting from them are therefore called 'fine'.

It is not necessary that all filaments have the same diameter although it is preferred because it is convenient in the production. Different filament diameters within the same cord can be chosen in order to fit them better together or they may be chosen in order to generate gaps between the filaments in order to allow for elastomer penetration.

The filaments used can be without any coating. Or the wires can be coated with a suitable coating. Preferred are:

-    electrolytically applied brass having a composition of between 62.5 and 75 wt% Cu, the remainder being zinc. The total coating mass is between 0 to 10 g/kg.
-    or the wires can be coated with zinc with a coating mass ranging from 0 to 300 g of zinc per kg of wire. The zinc can be applied onto the wire by means of an electrolytic process or by means of a hot dip process, followed or not followed by a wiping operation in order to reduce the total weight of the zinc.

Because of the corrosion protection of zinc and the presence of an iron zinc alloy layer that forms during the hot dip operation, the latter coating type is most preferred. Other coating types such as zinc alloy coatings e.g. a zinc aluminium alloy (e.g. having an eutectoid composition of about 95wt% zinc and about 5wt% Al) or even ternary alloys are not excluded. It should be clear that the enumeration of coating types is non-exhaustive.

The filaments are twisted together with a certain lay direction and a lay length. Typically the lay length is from 10 to 40 times the diameter of the strand. More preferred is a lay length between 20 to 30 times the diameter of the strand. The strands are twisted together to a cord having a lay length of between 5 to 20 times the diameter of the cord. More preferred is a lay length between 7 and 14 times the diameter of the cord.

The following combinations of filaments are known in the art:

-    3 strands each containing 3 filaments. In shorthand: 3x3
-    One 3-wire core surrounded by six 3-wire strands: 7x3
-    One 4-wire core surrounded by six 3-wire strands: 7x4

- One 3-wire core surrounded by five 7-wire strands: 3+5x7
- One 7-wire core surrounded by six 7-wire strands: 7x7
- One 19-wire core surrounded by eight 7-wire strands: 19+8x7
- One 19-wire core surrounded by nine 7-wire strands: 19+9x7

These combinations are only given by way of non-exhaustive examples. There are numerous cord combinations known in the art, which are envisaged in this invention, as long as they are composed out of at least two strands possibly, wound or not wound around a core.

The cords according the invention have strands with a lay direction opposite to the lay direction of the cord. E.g. if the strands have a lay direction in S, the cord will have a lay direction Z. The lay direction of the core - if present - is immaterial: it can be either S or Z.

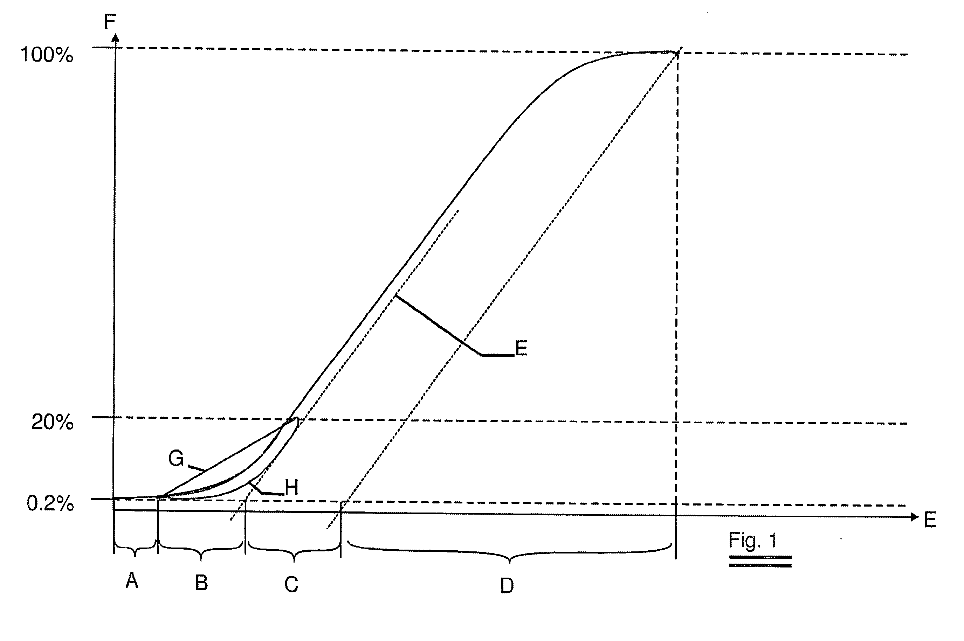

The features of the load-elongation curve that are of importance to understand the invention are illustrated in Figure 1. The fine cords that are object of this invention show a very distinct load-elongation behaviour compared to state-of the-art fine cords. This behaviour can be best distinguished by subjecting the cords to a cyclic loading between a low load and a high load. A 'low' load is e.g. the load used during manufacturing of the belt: 10 to 50 N is customary. A 'high' load is e.g. the load on the cord during use of the belt in the loaded part of a belt cycle. Belts are normally subjected to a maximum of 20 to 30% of their nominal breaking load. As these exact loads are not generally available, the inventors preferred to use as a 'low' load a load equal to 0.2% of the breaking load of the cord and as a 'high' load a load equal to 20% of the breaking load of the cord. The cyclic loading and unloading of a cord between defined forces is a well-known test in the field of steel wire ropes (see K. Feyrer, "Drahtseile, 2.Auflage", page 85).

The load-elongation curves are taken over different cycles between the low and high load, the reason being to be able to distinguish between the phenomenon of the 'setting of the cord' (Figure 1, 'A') and the 'structural elongation' (Figure 1, 'B'). The 'setting of the cord' is a first time adjustment of the filament positions leading to a small permanent elongation. After the first loading this 'setting of the cord' has disappeared. 'Structural elongation' remains after repeated loading. Typically 20 cycles are used in order to ascertain that the cord has fully settled although in practice the curve does not alter anymore after about 10 cycles.

Load - elongation diagrams of fine steel cords exhibit a linear portion (with an elongation interval indicated with 'D' in figure 1) between approximately 10 to 60% of their breaking load before showing non-linear plastic deformation at higher loads (with an elongation interval 'C' indicated in Figure 1). Hence the 20% of the breaking load is within this linear portion. This linear portion must be extrapolated backwards (indicated by the line 'E' in Figure 1) - in the direction of lower loads - in order to establish the 'structural elongation'. The 'structural elongation' ('B' in Figure 1) is now defined as the difference between the elongation at 0.2% of the breaking load of the backwards extrapolated linear behaviour with the elongation at 0.2% of the breaking load of the true curve.

As the filaments rub over one another the cyclic load - elongation diagram shows hysteresis i.e. the loading and unloading curve do not coincide completely and form a dosed loop ('H' in Figure 1). Therefore it is here understood that the structural elongation must be defined on the return cycle i.e. in going from 20% of the breaking load to 0.2% of the breaking load.

Fine steel cords according the invention have a structural elongation below 0.09 % (claim 1) and preferably below 0.06% (claim 2).

A further characteristic of the invention (claim 3) is that the load-elongation curve below 20% of the breaking load does not show the non-linear curve as is typical for the state-of-the-art cords. The elongation behaviour of the cord at loads below 20% of its breaking load fairly accurately follows a linear Hooke's law. The load-elongation curve of the invention cords remains between two straight lines that are separated by an elongation of 0.06% thus confining the load-elongation curve in a straight band. The load-elongation curves remain in this band from the second cycle onward - i.e. excluding the 'setting of the cord' - up to the twentieth cycle.

Also the slope exhibited by this band is markedly different from that of the prior art cords. If we consider the slope between the lower - i.e. the turning point at 0.2% of the breaking load - and upper turning point - i.e. the turning point at 20% of the breaking load - divided by the metallic surface of the wires as an 'equivalent elongation modulus' (as illustrated by the slope of line 'G' in figure 1), the invention cords have an equivalent elongation modulus exceeding 150 000 MPa (claim 4) and more preferably exceeding 170 000 MPa (claim 5). This is already much closer to the theoretical achievable maximum of about 200 000 MPa for a single wire. This equivalent elongation modulus is also known as the secant modulus between defined forces (see K. Feyrer, "Drahtseil, 2. Auflage", page 81)

In combination with the features above a favourable setting of the cord is claimed (claim 6). The 'setting of the cord' can be conveniently quantified as the elongation at first cycle, the cycle comprising: pre-tensioning the cord at 0.2% of its breaking load, loading the cord to 20% of its breaking load followed by unloading the cord to 0.2% of its breaking load. The elongation then measured is the 'setting elongation' (see 'A' of Figure 1). It will be clear to the person skilled in the art that 'the setting of the cord' can only be determined on cords that have not been loaded before. This setting elongation remains below 0.03% for the invention cords.

The fine steel cord can also be coated with an elastomer coating (claim 12). By preference this coating encloses a single fine steel cord and is round and thin. The elastomer is by preference polyurethane as this is the material normally used to make timing belts and is therefore compatible (claim 13).
Such a coating must adhere well to the fine steel cord in order to maintain the integrity of the composite during use (claim 14). Adherence of the cord to the elastomer can be assessed through the ASTM 2229/93 pull-out test. Typically the pull-out force of the fine cord - having a diameter 'D' expressed in mm - embedded in an elastomer over a length 'L' must be larger than 40xDxL Newton, but most preferred is if the elastomer adheres to the cord with a pull-out force that is larger than 50xDxL Newton.
The penetration of the elastomer greatly helps to keep the filaments 'in place' during their use. It is therefore preferred that the elastomer penetrates at least the outer strands of the cord. Most preferred is that all individual filaments are completely surrounded by polymer over substantially the length of the fine cord.

The inventors have also observed another unexpected advantage of the inventive cord: the spread of all parameters - and most notably the structural elongation - in the load-elongation curve is lower for the inventive cords compared to the spread for the conventional cords. 'Spread' in this context has to be considered as the long-term variation from production run to production run. The reduced variation can easily be understood from the fact that a structural elongation below zero is simply not possible. The inventive cords are 'calibrated' against the theoretical cord having a zero structural elongation. As such they will have a much lower spread compared to conventional cords where in the latter the structural elongation can wander in both directions.

From the above it will be clear for the person skilled in the art that the determination of the different product parameters is not so much dependent on the 20% load limit during the measurement, as long as this 'high load' is situated in the linear portion of the curve. Hence, a 'high load' of 30, 40 or even 50% of the breaking load, will lead-within the measurement uncertainty - to identical results for the product parameters. However, the opposite is true for the 'low load': there the measured product parameters clearly depend strongly on the value of the lower load due to the non-linear behaviour of the conventional cord.

It will also be clear that the measurement of the above parameters must proceed with the appropriate apparatus having the necessary accuracy and precision. In particular the load cell must be appropriate for the low loads involved and the elongation must be precisely measured by means of an extensiometer. Also the apparatus must be capable of cycling the load. Although the measurement requirements are high, today's state-of-the-art measuring equipment is capable of fulfilling these requirements. The curves in this application have been generated on a Zwick (Ulm, Germany) BZ020/TH2S apparatus controlled by the "testXpert V8.1" software.

All the product features as described in the claims 1 through 6 are the consequence of the processing of the cords only. Indeed, the invention cords do not discriminate themselves from the state-of the-art product in terms of known structural features such as steel composition, coating, filament diameters, strand and cord lay lengths. For example the increase in equivalent elongation modulus as claimed in claim 4 and 5 has nothing to do with a change in lay length of the cord: they are exactly the same between invention cords and state-of-the-art cords. This feature is particularly mentioned, because it is known in the art that increasing the lay-length of the cord increases the modulus.

The second aspect of the invention concerns a method to produce the inventive cord. According this method the needed strands are produced having a number of twists $n_s$ of at the most $N_s$ i.e. the number of twists the filaments must have in the strand of the final cord. Each of the necessary strand spools is mounted in an individual twister pay-off. A twister pay-off is a pay-off system that is able to increase the number of twists per unit length in the strand when turning in the same lay direction of the strand. Mutatis mutandis, the twister pay-off is able to reduce the number of twists per unit length of the strands when it is turning in the direction opposite to the lay direction of the strand. The number of twists added or subtracted is proportional to the ratio of rotational speed of the twister to the linear speed of the strand. Preferably the rotational speed is adjustable. Most preferable is that both speeds are adjustable.

All strands are lead to the assembly point at the entrance of a bunching machine. There the strands are assembled into a cord. The strands obtain $N_c$ twists per unit length. As the lay direction of the cord is opposite to the lay direction of the strands, the strands are untwisted with $N_c$ twists per unit length. The rotational speed of the twister pay-off must be adapted in order to obtain the correct number of twists per unit length of the strand in the final cord. Finally the cord is wound on a cord spool at the inside of the bunching machine.

The inventors have found that in order to obtain the fine cords as claimed, the number of twists per unit length that a strand locally obtains along its track from strand spool to cord spool must be minimal, i.e. definitely below $N_c+N_s$ and preferably close to $N_s$, while even below $N_s$ before entry in the cord is not excluded. Any excess of twists given to the strands - even if these twists are finally taken out of the strand upon bunching of the cord - leads to 'looseness' of the strands, which is reflected in the undesired structural elongation, causing the dimensional control problem of the synchronous belts. Although the above simply and clearly reflects the spirit of the invention, the reduction into practice of this insight required some non-obvious changes in the process.

A first way to implement this insight was to increase the pay-off tension to an unusual high level as described in claim 9. The pay-off tension is most conveniently expressed in terms of the ultimate breaking load of the strand. At least the pay-off tension must be higher than 15% of the strand's breaking load. Preferably it is above 20%. By increasing the pay-off tension, a torque is exerted on the strand that therefore tends to untwist and thereby starts to rotate during its travel from strand spool to cord spool. Due to this rotation, the total number of twists of the strand before entry into the cord is lowered.

A second important feature of the method is that the entrance pulley of the bunching machine must be put under an angle with respect to the plane formed by entering and exiting cord (claim 10). After this pulley the cord is guided in a bow towards the reversing pulley at the end of the bow. Preferentially these pulleys are grooved. Even more preferred is that these pulleys have a U shaped grove larger than the diameter of the cord. Normally the rotational axis of the entrance pulley is perpendicular to the plane formed by entering an exiting cord i.e. directed along the normal of that plane. According to the invention the entrance pulley axis is inclined with respect to this normal. The inclination is set such that the cord rolls in the U shaped groove in its closing direction. The closing direction is the rotational direction in which the number of twists on the cord increases. More preferred is that the axis of the pulley is rotated around the bisector of the lines formed by the entering and exiting cord. Even more preferred is that both entrance and reversing pulley are put under an angle. The principle of putting the entrance and reversing pulleys under angle is to shift the point where the strands in the cord obtain their final number of twists to the assembly point. In this way the untwisting of the strands in the bow of the bunching machine is prevented. For clarity: in a state-of-the art bunching machine (no pulleys under angle) the cord receives half of its final number of twists at the entrance pulley and the other half of its final number of twists at the reversing pulley. Hence the strand is untwisted during its travel in the bow of the bunching machine while it gets its final position in the cord. In the cord the strand is thus fixed in a loosened state causing again too high structural elongation, which on its turn leads to the dimensional control problem of synchronous belts.

A third feature of the invented method relates to the path the strand travels from strand spool to cord spool. There the inventors found that the path must not be obstructed by any type of guiding pieces, rollers, pulleys or any other device that could impede the rotation of the strand. Any of such devices leads to a restriction of the untwisting by the bunching machine, which should be prevented according the invention (claim 11).

According a third aspect of the invention, the use of such cords for the reinforcement of synchronous belts is claimed (claim 15). Such a belts have an excellent dimensional control and remain stable during use.

### Brief description of the drawings.

The invention will now be described into more detail with reference to the accompanying drawings wherein

- FIGURE 1 : Depicts a typical load-elongation of a fine steel cord, with the parameters of importance.
- FIGURE 2 : Shows the load elongation diagram of a fine steel cord of type 7x3x0.15 according the prior art and according a first preferred embodiment.
- FIGURE 3 : Shows the load elongation diagram of a fine steel cord of type 3x3x0.15 according the prior art and according a second preferred embodiment.
- FIGURE 4a: Illustrates the prior art production method and the inventive production method.
- FIGURE 4b: Illustrates the variation of twists per unit length on the strand in their travel from strand spool to cord spool for both the state-of-the-art method 'CP' and inventive method 'IP'.
- FIGURE 5: a drawing of a pulley mountable under angle.

### Description of the preferred embodiments of the invention.

In a first preferred embodiment, the inventors have produced a 7x3 type of cord characterised by the following formula:

$$[(3x0.15)_{9s} + 6x(3x0.15)_{9s}]_{8Z}$$

i.e. a core strand consisting of 3 filaments twisted together with a lay length of 9 mm in S direction is combined with 6 outer strands again consisting of 3 filaments twisted together with a lay length of 9 mm in S direction to a cord. The strands are twisted in to the cord with a lay length of 8 mm in Z direction. The filaments were plain carbon steel filaments having a carbon content of about 0.725 wt. %C and having a hot dip galvanised zinc coating. The cord was produced from the filaments according the conventional process and the inventive process. The cord has a metal cross-sectional area of 0.371 mm$^2$ (acc. DIN 3051 i.e. sum of filament cross sections).

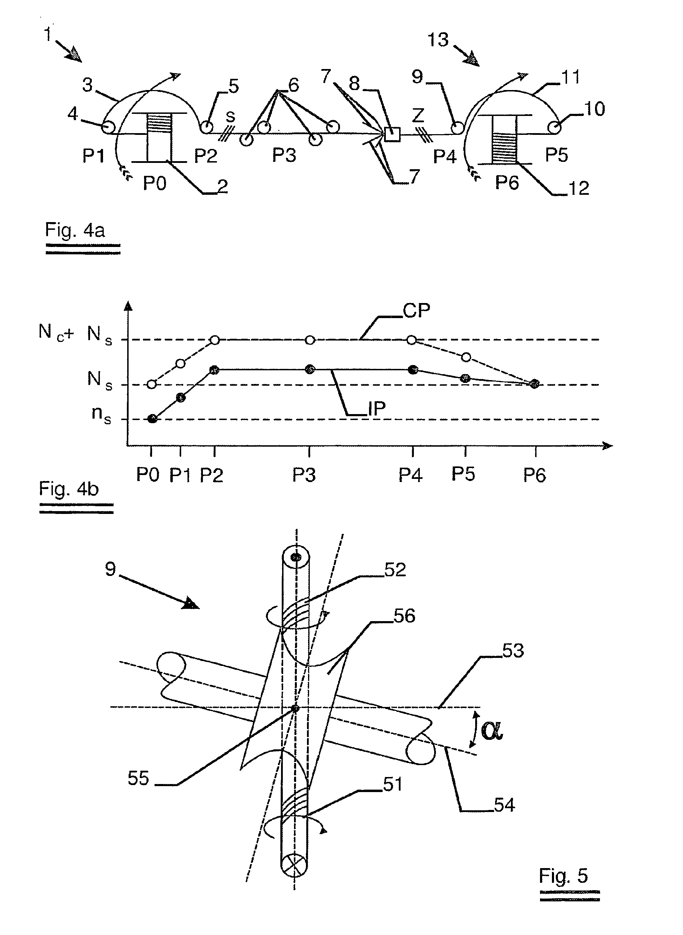

First the conventional process will be explained by means of Figure 4a. Thereafter the inventive changes to this process will be highlighted. A strand spool 2 - containing a strand with $N_s$ twists per meter - is mounted in a twister pay-off system 4. A twister pay-off 1 as known in the art can be physically implemented by rotatably mounting a spool 2 in a stationary hanging cradle (not shown) suspended between two rotation points (not shown). The strand is pulled form the spool through the first rotational point over a revolving reversing pulley or guide piece 4 to the second rotational point where again a revolving reversing pulley or guide piece 5 leads the strand out of the twister pay-off in a direction opposite to the direction in which the strand is pulled form its spool. During its travel from the first to the second pulley the strand maybe guided through a flyer 3 rotating around the stationary cradle. However, embodiments without flyer 3 are also known in the art. Other embodiments of a twister pay-off are known in which the spool rotation axis on its turn rotates around an axis along which the strand leaves the pay-off, the latter axis being perpendicular to the spool rotation axis. Also these embodiments of a twister pay-off are explicitly included in the inventive process. The twister pay-off will add to $N_s$ a number of twists per meter. The added number of twists must correspond to the number of twists of the cord $N_c$, because the bunching machine 13 will later remove exactly this number of twists. The dashed line between P0 and P2 in Figure 4b schematically depicts the increase of the number of twists per unit length of the strand.

After leaving the twister pay-off at P2 (Figure 4a), the strand is guided over different guiding pulleys 6 such that the strand can conveniently be combined with other strands 7 to form the cord in the assembly point 8. For each strand, an individual twister pay-off must be operated under identical process conditions. At the assembly point 8, the strands are twisted together by the bunching machine 13. Between the assembly point 8 and the cord spool 12, the cord receives $N_c$ twists per meter while the strands are untwisted $N_c$ twists per meter. Due to the working principle of the bunching machine 13, about $N_c/2$ twists are taken out of the strands between entrance pulley 9 and reversing pulley 10 and the remaining $N_c/2$ twists are taken out from the strands between the reversing pulley 10 and cord spool 12. The evolution of the number of twists on the strand is illustrated by the dashed line between P4 and P6 of Figure 4b.

For the particular embodiment, $N_s$ is (1000/9) twists per meter and $N_c$ is (1000/8) twists per meter. As the cord has a lay length opposite to that of the strands, the strands will be untwisted in their travel from strand spool to cord spool and this must be compensated for by twisting up to (1000/9)+(1000/8) twists per meter, which corresponds to a lay length of 4.235 mm in 's' direction. Figure 4b (the dashed line marked 'CP') illustrates the evolution of the number of twists per meter on the strand in its travel from strand spool to cord spool in the conventional process. It will be clear that the tight twisting of 4.235 mm leaves a helical plastic deformation in the strands when they are untwisted to a lay length of 9 mm. This helical plastic deformation leads to the high structural elongation.

The difference between the conventional process and the inventive process is explained below and summarised in Table 1. Figure 4b, illustrates the difference on the number of applied twists per unit length on the strand for the conventional process (curve 'CP') and the inventive process (curve 'IP').

**Table 1**

| Process parameter | Conventional process | Inventive process |
|---|---|---|
| Initial strand lay length | 9 mm | 14 mm |
| Initial strand twists per meter | 111 tw/m | 71.4 tw/m |
| Ratio of rotational speed of twister to that of bunching machine | 1.000 | 1.311 |
| Ratio of Strand pay-off tension to Strand Breaking Load | 7.7 % | 15 % |
| Pulley angles bunching machine | entrance pulley: 0° reversing pulley: 0° | entrance pulley: 10° reversing pulley: 10° |
| Number of pulleys from strand spool to cord spool | 6 | 4 |
| Resulting cord | Cord 'CP' | Cord 'IP' |

Firstly, the number of twists $n_s$ of the original strands is lower or equal than $N_s$ in the inventive process as indicated in P0 of Figure 4b. Due to this, the twister pay-off must run at a higher rotational speed than the bunching machine in order to get the correct number of twists per unit length in the strands of the final cord.

However, the twists applied are physically prevented of building up to a local level of $N_s+N_c$ by applying a higher pay-off tension to the strands than in the conventional process. By increasing the pay-off tension of the cords, a torque develops in the strand that untwists the strands, thus reducing the number of twists on curve 'IP' in P2 of figure 4b to well below $N_s+N_c$.

A further improvement to allow the free rotation of the strand is the elimination of the guiding pulleys 6 in Figure 4a. Guiding pulleys have the tendency to restrict the rotation of strands as soon as they bend the cord. Because some pulleys have been eliminated the strand twists also do not built up at P3 as shown on curve 'IP' in Figure 4b, P3.

Another improvement to limit the built-up of twists in the strand is to bring the strand untwisting action of the bunching machine closer to the assembly point 8. This can be achieved by putting the entrance and/or reversing pulley 9 of the bunching machine under an angle as illustrated in Figure 5. There the entering cord 51 is guided over a U grooved pulley 56 and leaves as exiting cord 52. The bisector of the entering cord 51 and exiting cord 52 that is perpendicular to the plane of the paper is noted as 55. The axis of the pulley 54 is rotated over the angle $\alpha$ with respect to the normal to the plane 53 formed by entering cord 1 and exiting cord 2. The direction of the angle should be chosen such that the cord tends to close. By putting the pulleys under angle the cord starts to roll in the U shape of the pulley, twisting up the strands in the cord and hence also untwisting the filaments in the strands. Therefore the cord obtains its final lay length much closer to the assembly point than in the conventional process. Consequently, the strands do untwist during cord formation to a much lesser extent then in the conventional process as is illustrated at P4 in Figure 4b (comparing curve 'CP' to curve 'IP').

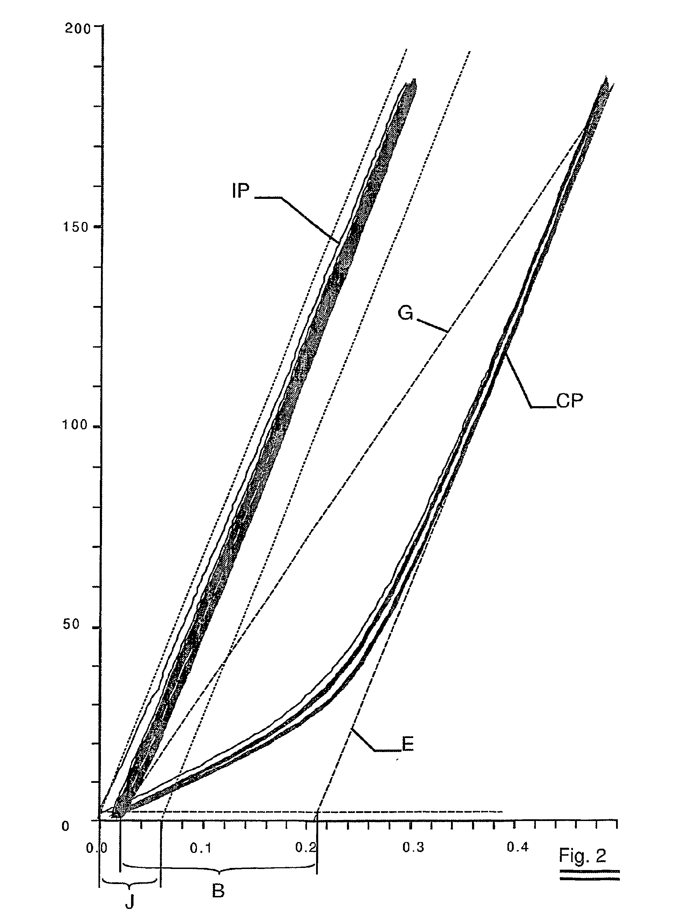

The difference in load-elongation curves of the cords 'CP' and 'IP' made according the two different processes is depicted in Figure 2. The features of these curves are summarised in table 2:

**Table 2**

| Product parameter | Cord 'CP' | Cord 'IP' |
|---|---|---|
| Cord Breaking Load | 920 N (*) | 920 N (*) |
| Low load limit | 1.84 N | 1.84 N |
| High load limit | 184 N | 184 N |
| Structural elongation on return of 20th cycle | 0.160 % | 0.018 % |
| Slope equivalent to an elongation modulus | 115 910 N/mm$^2$ | 175 461 N/mm$^2$ |
| Elongation after 1st cycle | 0.006 % | 0.012 % |
| (*) Aim value, not measured. | | |

In Figure 2, the identification of the different features as discussed for Figure 1 are used. Added also is a strip 'J' having a width of 0.06% in elongation, illustrating the fact the invention cord remains in between these limits (claim 3).

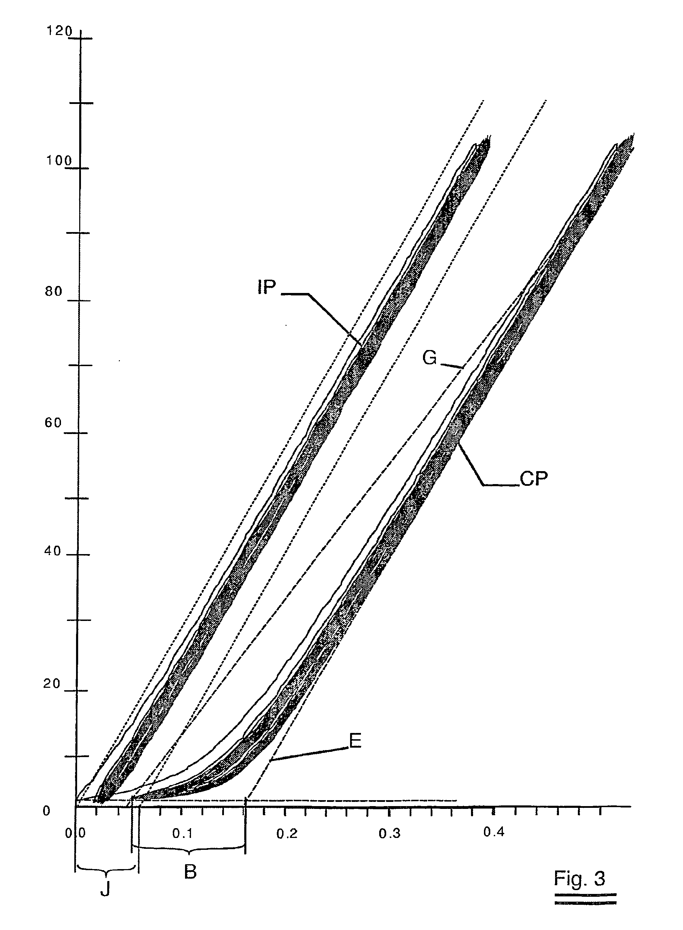

A second preferred embodiment is a 3x3x0.15 cord of which the table 3 both summarises the processing conditions used and product features obtained. The load-elongation curve can be found in Figure 3. The 3x3x0.15 construction is constructed as follows:

$$[3 \times (3 \times 0.15)_{9s}]_{8Z}$$

**Table 3**

| Parameter | Conventional process | Inventive process |
|---|---|---|
| Initial strand lay length | 9 mm | 14 mm |
| Initial strand twists per meter | 111 tw/m | 71 tw/m |
| Ratio of rotational speed of twister to that of bunching machine | 1.000 | 1.311 |
| Ratio Strand pay-off tension to Strand Breaking Load | 10% | 18 % |
| Pulley angles bunching machine | 0°/0° | 10°/0° |
| Number of pulleys from strand spool to cord spool | 6 | 4 |
| Cord Breaking Load | 520 N (*) | 520 N (*) |
| Low load limit | 1 N | 1 N |
| High load limit | 104 N | 104 N |
| Structural elongation on return of 20th cycle | 0.105 % | 0.020 % |

(continued)

| Parameter | Conventional process | Inventive process |
|---|---|---|
| Slope equivalent to an elongation modulus | 145 595 N/mm$^2$ | 185 378 N/mm$^2$ |
| Elongation after 1st cycle | 0.047 % | 0.015 % |
| (*) Aim value, not measured. | | |

A third preferred embodiment concerns a (3+5x7)x0.15 fine steel cord that can be detailed as follows:

$$[(3 \times 0.15)_{9\,s} + 5 \times (0.15 + 6 \times 0.15)_{10\,s}]_{12.5\,Z}$$

The cord was manufactured according the standard and the inventive process and the following results were obtained:

**Table 4**

| Parameter | Conventional process | Inventive process |
|---|---|---|
| Cord Breaking Load | 1730 N (*) | 1730 N (*) |
| Low load limit | 3.46 N | 3.46 N |
| High load limit | 346 N | 346 N |
| Structural elongation on return of 20th cycle | 0.085 % | 0.023 % |
| Slope equivalent to an elongation modulus | 142 000 N/mm$^2$ | 173 000 N/mm$^2$ |
| Elongation after 1st cycle | 0.006 % | 0.0085 % |
| (*) aim value, not measured. | | |

In a fourth preferred embodiment, the 7x3x0.15 of the first embodiment was coated with an elastomer coating. Prior to this coating, the cord was cleaned by means of a steam degreasing step. Subsequently the cord was dipped into a solution of 1.5 vol. % of N-(2-amino ethyl)-3-amino propyl tri methoxy silane dissolved in a mixture of isopropanol and water, followed by drying. The use of such organo functional silanes for adhesion promotion is known in the art (see e.g. WO 2004/076327). Subsequently the cord was coated with a layer of Desmopan® 392 from Bayer, enlarging the bare cord diameter from 0.90 mm to 1.00 mm. Coating was performed by means of a standard extruder whereby the steel cord was preheated to 180°C prior to entering the extruder head. Polyurethane was injected into the extruder head at 225°C at a pressure of 100 bar. After coating the coated fine steel cord was cooled in water. Adhesion testing according the ASTM D2229/93 test over an embedment length of 12.7 mm revealed a pull-out force in excess of 929 N as 5 out of the 6 cords broke before the cord pulled of from the polyurethane block which is above the 50xDxL = 575 N limit. In addition, a cross section of the cord revealed that each of the 21 filaments was embedded in PU.
The cord thus coated (Cord 'IP+ PU')showed the same favourable elongation behaviour as the original inventive cord as summarised in table 5.

**Table 5**

| Product parameter | Cord 'CP' | Cord'IP' | Cord 'IP+PU' |
|---|---|---|---|
| Low load limit | 1.8 N | 1.8 N | 1.8 N |
| High load limit | 180 N | 180 N | 180 N |
| Structural elongation on return of 20th cycle | 0.089 % | 0.012 % | 0.012 % |
| Slope equivalent to an elongation modulus | 134 000 N/mm$^2$ | 177 000 N/mm$^2$ | 177 000 N/mm$^2$ |
| Elongation after 1st cycle | 0.002 % | 0.007 % | 0.002 % |

In a sixth preferred embodiment, it was verified that the favourable properties were not lost during making of the synchronous belt. A closed loop belt was produced with a 10 mm pitch and a length of 840 mm containing 16 cords of type 7x3x0.15. A first belt was produced with conventional process (CP) cords, a second belt was produced with the inventive process (IP) cords, and a third belt was made with IP cords, coated with PU. The belts had a breaking load of about 15 kN. They were cyclically loaded 10 times from a pretension of 100 N ('Low Load') to 5kN ('High Load'). Although the measuring conditions are not exactly the same as for the cords, a comparison of the relevant parameters can still be made. Table 6 summarises the results:

**Table 6**

| Cords used... | CP cords | IP cords | IP, PU coated |
|---|---|---|---|
| Structural elongation on return of 10th cycle | 0.096 % | <0.010 % | 0.038 % |
| Elongation after 1st cycle | 0.041 % | 0.034 % | 0.032 % |
| Elongation between high and low load on 2nd to 10th cycle | 0.562 % | 0.466 % | 0.484 % |

During use, the belts with the IP cords and the coated IP cords, showed a much lower elongation and - consequently - tooth wear than the CP cords. This proves that the inventive cord solves the 'dimensional control' problem.

**Claims**

1. A fine steel cord for reinforcing a synchronous belt, said fine steel cord comprising at least two strands having a first number of $N_c$ twists per unit length in a first lay direction in said cord, each of said strands comprising at least two steel filaments having a second number $N_s$ of twists per unit length in a second lay direction in said strands, said second lay direction being opposite to said first lay direction, said filaments having a diameter between 30 and 250 $\mu$m, **characterised in that** the number of twists per unit length said strand locally has obtained during the twisting of said cord is below $N_c+N_s$ such that when said cord is being subjected to twenty load cycles, each load cycle starting at 0.2% of the breaking load of said fine steel cord going up to 20% of the breaking load of said fine steel cord and returning to 0.2% of the breaking load of said fine steel cord, said fine steel cord has a structural elongation on the return side of said twentieth load cycle of below 0.09 % at 0.2% of the breaking load of said fine steel cord.

2. The fine steel cord as in claim 1 wherein said structural elongation is below 0.06%.

3. The fine steel cord as in any of claim 1 or 2 wherein said load-elongation curve on said second to twentieth cycle remains in between two parallel, straight limiting lines said lines being 0.06% apart.

4. The fine steel cord as in any one of claims 1 to 3 wherein a straight line connecting the starting point and the turning point at said twentieth load cycle has a slope equivalent to an elongation modulus of more than 150 000 MPa.

5. The fine steel cord as in any one of claims 1 to 3 wherein a straight line connecting the starting point and the turning point at said twentieth load cycle has a slope equivalent to an elongation modulus of more than 170 000 MPa.

6. The fine steel cord as in any one of claims 1 to 3 wherein the elongation at 0.2% of the breaking load of the cord after the first cycle is below 0.03%.

7. The fine steel cord as in claim 1 wherein the number of twists per unit length said strand locally has obtained during the twisting of said cord is $N_s$.

8. The fine steel cord as in claim 1 wherein the number of twists per unit length said strand locally has obtained during the twisting of said cord is below $N_s$.

9. A method of manufacturing a fine steel cord for reinforcing a synchronous belt according claim 1, said strands further having a breaking load, said process comprising the steps of:

   - Providing said strands with a number of twists per unit length $n_s$ lower or equal than the second number of twists per unit length $N_s$ on strand spools (2)

- Unwinding said spools (2) in a twister pay-off (1) with a pay-off tension
- Assembling said strands at an assembly point (8) before the entrance pulley (9) of a bunching machine (13)
- Winding said cord on a cord spool (12) after passing a reversing pulley (10)

**characterised in that**
said pay-off tension is higher than 15 % of the breaking load of the strand for shifting the final lay formation closer to the assembly point.

10. The method of manufacturing according claim 9 wherein the final lay formation is shifted to the assembly point by putting the said entrance pulley (9) or said reversing pulley (10) under an angle with respect to the plane formed by entering (51) and exiting cord (52).

11. The method of manufacturing according claim 9 or 10 wherein the twists applied by said bunching machine on said strands are uninterruptedly lead to the exit of said twister pay-off.

12. The fine steel cord as in any one of claims 1 to 8 further comprising an elastomer coating, said coating for surrounding said single fine steel cord.

13. The fine steel cord as in claim 12 wherein said elastomer is polyurethane.

14. The fine steel cord as in any one of claim 12 or 13 wherein said elastomer coating adheres to said fine steel cord.

15. The use of fine steel cords as specified in any one of claims 1 to 8 and 12 to 14 as reinforcement in a synchronous belt.

**Patentansprüche**

1. Feiner Stahlkord zum Verstärken eines Zahnriemens, wobei der feine Stahlkord mindestens zwei Litzen mit einer ersten Anzahl $N_c$ von Drehungen pro Längeneinheit in einer ersten Schlagrichtung in dem Kord umfasst, wobei jede Litze mindestens zwei Stahlfilamente mit einer zweiten Anzahl $N_s$ von Drehungen pro Längeneinheit in einer zweiten Schlagrichtung in den Litzen umfasst, wobei die zweite Schlagrichtung zur ersten Schlagrichtung entgegengesetzt ist, wobei die Filamente einen Durchmesser zwischen 30 und 250 $\mu$m aufweisen,
**dadurch gekennzeichnet, dass**
die Anzahl der Drehungen pro Längeneinheit,die die Litze während des Verdrillens des Kords örtlich erhält, unter $N_c + N_s$ liegt, so dass jeder Lastzyklus, wenn der Kord zwanzig Lastzyklen unterzogen wird, bei 0,2 % der Bruchlast des feinen Stahlkords beginnt und bis zu 20 % der Bruchlast des feinen Stahlkords ansteigt und auf 0,2 % der Bruchlast des feinen Stahlkords zurückgeht, wobei der feine Stahlkord in der Rückgangsphase des zwanzigsten Lastzyklus bei 0,2 % der Bruchlast des feinen Stahlkords eine strukturelle Dehnung von unter 0,09 % aufweist.

2. Feiner Stahlkord nach Anspruch 1, wobei die strukturelle Dehnung unter 0,06 % liegt.

3. Feiner Stahlkord nach Anspruch 1 oder 2, wobei die Last-Dehnungs-Kurve vom zweiten bis zum zwanzigsten Zyklus zwischen zwei parallelen, geraden Begrenzungslinien verbleibt, wobei die Linien 0,06 % voneinander entfernt liegen.

4. Feiner Stahlkord nach einem der Ansprüche 1 bis 3, wobei eine gerade Linie, die den Anfangspunkt und den Umkehrpunkt beim zwanzigsten Lastzyklus verbindet, eine Neigung aufweist, die einem Dehnungsmodul von mehr als 150 000 MPa entspricht.

5. Feiner Stahlkord nach einem der Ansprüche 1 bis 3, wobei eine gerade Linie, die den Anfangspunkt und den Umkehrpunkt beim zwanzigsten Lastzyklus verbindet, eine Neigung aufweist, die einem Dehnungsmodul von mehr als 170 000 MPa entspricht.

6. Feiner Stahlkord nach einem der Ansprüche 1 bis 3, wobei die Dehnung bei 0,2 % der Bruchlast des Kords nach dem ersten Zyklus unter 0,03 % liegt.

7. Feiner Stahlkord nach Anspruch 1, wobei die Anzahl der Drehungen pro Längeneinheit, die die Litze während des Verdrillens des Kords örtlich erhält, $N_s$ ist.

8. Feiner Stahlkord nach Anspruch 1, wobei die Anzahl der Drehungen pro Längeneinheit, die die Litze während des Verdrillens des Kords örtlich erhält, kleiner als $N_s$ ist.

9. Herstellungsverfahren für einen feinen Stahlkord zum Verstärken eines Zahnriemens nach Anspruch 1, wobei die Litzen ferner eine Bruchlast aufweisen, wobei das Verfahren folgende Schritte umfasst:

   - Bereitstellen einer Litze mit einer Anzahl von Drehungen pro Längeneinheit $n_s$, die kleiner oder gleich der zweiten Anzahl von Drehungen pro Längeneinheit $N_s$ an den Litzespulen (2) ist
   - Abwickeln der Spulen (2) in einem Abspulgerät (1) mit einer Abspulspannung
   - Zusammenführen der Litzen am Zusammenführungspunkt (8) vor der Einzugsrolle (9) einer Aufspulmaschine (13)
   - Aufwickeln des Kords auf eine Kordspule (12) nach dem Passieren einer Umkehrrolle (10)

   **dadurch gekennzeichnet, dass**
   die Abspulspannung größer als 15 % der Bruchlast der Litze ist, um die endgültige Schlagbildung näher an den Zusammenführungspunkt (8) zu verlagern.

10. Herstellungsverfahren nach Anspruch 9, wobei die endgültige Schlagbildung zum Zusammenführungspunkt verlagert wird, indem die Einzugsrolle (9) oder die Umkehrrolle (10) in Bezug zu der Ebene, die von dem eintretenden (51) und dem austretenden Kord (52) gebildet wird, in einen Winkel gebracht wird.

11. Herstellungsverfahren nach Anspruch 9 oder 10, wobei die Drehungen, die durch die Aufspulmaschine an den Litzen ausgeführt werden, ununterbrochen zum Austritt aus dem Abspulgerät geführt werden.

12. Feiner Stahlkord nach einem der Ansprüche 1 bis 8, ferner eine Elastomerbeschichtung umfassend, wobei die Beschichtung den einzelnen feinen Stahlcord umschließt.

13. Feiner Stahlkord nach Anspruch 12, wobei das Elastomer Polyurethan ist.

14. Feiner Stahlkord nach Anspruch 12 oder 13, wobei die Elastomerbeschichtung an dem feinen Stahlkord haftet.

15. Die Verwendung des feinen Stahlkords nach einem der Ansprüche 1 bis 8 und 12 bis 14 als Verstärkung in einem Zahnriemen.

**Revendications**

1. Câble d'acier fin pour le renforcement d'une courroie dentée, ledit câble d'acier fin comprenant au moins deux brins ayant un premier nombre $N_c$ de torsions par unité de longueur dans une première direction de pose dans ledit câble, chacun desdits brins comprenant au moins deux filaments en acier ayant un second nombre $N_s$ de torsions par unité de longueur dans une seconde direction de pose dans lesdits brins, ladite seconde direction de pose étant à l'opposée de ladite première position de pose, lesdits filaments ayant un diamètre situé entre 30 et 250 $\mu$m,
   **caractérisé en ce que**
   le nombre de torsions par unité de longueur que ledit brin a localement obtenues pendant la torsion dudit câble est inférieur à $N_c + N_s$, de sorte que lorsque ledit câble est soumis à 20 cycles de charge, chaque cycle de charge commençant à 0,2 % de la charge de rupture dudit câble d'acier fin allant jusqu'à 20 % de la charge de rupture dudit câble d'acier fin et retournant à 0,2 % de la charge dudit câble d'acier fin, ledit câble d'acier fin possède un allongement structural sur le brin inférieur dudit vingtième cycle de charge de moins de 0,09 % à 0,2 % de la charge de rupture dudit câble d'acier fin.

2. Câble d'acier fin selon la revendication 1, dans lequel ledit allongement structural est inférieur à 0,06 %.

3. Câble d'acier fin selon l'une quelconque des revendications 1 ou 2, dans lequel ladite courbe d'allongement sous charge sur lesdits deuxième au vingtième cycles reste entre deux lignes limites droites et parallèles, lesdites lignes étant séparées de 0,06 %.

4. Câble d'acier fin selon l'une quelconque des revendications 1 à 3, dans lequel une ligne droite reliant le point de départ et le point de retour audit vingtième cycle de charge possède une inclinaison qui équivaut à un module d'allongement de plus de 150 000 MPa.

5. Câble d'acier fin selon l'une quelconque des revendications 1 à 3, dans lequel une ligne droite reliant le point de départ et le point de retour audit vingtième cycle de charge possède une inclinaison qui équivaut à un module d'allongement de plus de 170 000 MPa.

6. Câble d'acier fin selon l'une quelconque des revendications 1 à 3, dans lequel l'allongement à 0,2 % de la charge de rupture du câble après le premier cycle est inférieur à 0,03 %.

7. Câble d'acier fin selon la revendication 1, dans lequel le nombre de torsions par unité de longueur que ledit brin a obtenues pendant la torsion dudit câble est de $N_s$.

8. Câble d'acier fin selon la revendication 1, dans lequel le nombre de torsions par unité de longueur que ledit brin a obtenues pendant la torsion dudit câble est inférieur à $N_s$.

9. Procédé de fabrication d'un câble d'acier fin pour le renforcement d'une courroie dentée selon la revendication 1, lesdits brins ayant en outre une charge de rupture, ledit procédé comprenant les étapes consistant à :

   - utiliser lesdits brins avec un certain nombre de torsions par unité de longueur $N_s$ inférieur ou égal au second nombre de torsions par unité de longueur $N_s$ sur les bobines de brins (2)
   - dérouler lesdites bobines (2) dans un dérouleur à torsion (1) avec une tension de déroulement
   - assembler lesdits brins à un point d'assemblage (8) avant la poulie d'entrée (9) d'une machine à toronner (13)
   - enrouler ledit câble sur un enrouleur de câble (12) après avoir passé une poulie de renvoi (10)

   **caractérisé en ce que**
   ladite tension de déroulement est supérieure à 15 % de la charge de rupture du brin pour déplacer la formation de pose finale plus près du point d'assemblage.

10. Procédé de fabrication selon la revendication 9, dans lequel la formation de pose finale est déplacée vers le point d'assemblage en mettant ladite poulie d'entrée (9) ou ladite poulie de renvoi (10) sous un angle relativement au plan formé par le câble entrant (51) et le câble sortant (52).

11. Procédé de fabrication selon la revendication 9 ou 10, dans lequel les torsions appliquées par ladite machine à toronner sur lesdits brins sont menées de manière ininterrompue vers la sortie dudit dérouleur à torsion.

12. Câble d'acier fin selon l'une quelconque des revendications 1 à 8, comprenant en outre un revêtement élastomère, ledit revêtement pour entourer ledit unique câble d'acier fin.

13. Câble d'acier fin selon la revendication 12, dans lequel ledit élastomère est un polyuréthane.

14. Câble d'acier fin selon l'une quelconque des revendications 12 ou 13, dans lequel ledit revêtement élastomère adhère audit câble d'acier fin.

15. Utilisation de câbles d'acier fin selon l'une quelconque des revendications 1 à 8 et 12 à 14 comme renforcement d'une courroie dentée.

Fig. 1

EP 1 680 610 B1

Fig. 2

Fig. 3

Fig. 4a

Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5784874 A
- EP 0960749 A
- WO 2004076327 A

**Non-patent literature cited in the description**

- *Antriebstechnik,* 1999, vol. 38 (5), 71-73